# EUROPEAN PATENT SPECIFICATION

(11) **EP 1 869 058 B1**
(45) Date of publication and mention of the grant of the patent: **16.12.2009**
(21) Application number: 06749534.1
(22) Date of filing: 07.04.2006
(51) Int. Cl.: C07F 7/18

(54) **PROCESS FOR MAKING SILYLISOCYANURATE**
HERSTELLUNGSVERFAHREN FÜR SILYLISOCYANURAT
PROCEDE DE PRODUCTION DE SILYLISOCYANURATE

(30) Priority: 14.04.2005 US 106321
(43) Date of publication of application: 26.12.2007
(73) Proprietor: Momentive Performance Materials Inc., Albany, NY 12211 (US)
(72) Inventor: CHILDRESS, Shawn, R., Bartlesville, Oklahoma 14006 (US); MCINTYRE, James, L. Jr.,, Sistersville, West Virginia 26175 (US)
(74) Representative: Herrmann, Uwe
(86) International application number: PCT/US2006/013093
(87) International publication number: WO 2006/113182

(56) References cited:
- US-A- 5 218 133

## Description

### BACKGROUND OF THE INVENTION

This invention relates to processes for making silylisocyanurate, e.g., 1,3,5-tris[(trialkoxysilyl)alkyl]isocyanurates.

Silylisocyanurate has utility as an accelerator or promoter for adhesion of room temperature vulcanizable organosiloxanes and silane modified polymers, as an additive for organosiloxane compositions suitable for fiber treatment and in automotive coatings.

U.S. Patent No. 3,598,852 describes a process for making silylisocyanurate in which a haloorganosilane intermediate is reacted with a metal cyanate in the presence of a high boiling polar solvent such as dimethylformamide. Subsequently, the polar solvent is removed by vacuum stripping. However, the solvent is toxic and difficult to remove.

U.S. Patent No. 4,880,927 describes a process for preparing silylisocyanurate in which the silylisocyanate is thermally treated or heated for cyclization to the trimer in the presence of a strongly basic catalyst such as alkali metal hydroxides or alkoxides. However, when this process is employed for the preparation of silylisocyanurate, it requires the isolation of toxic isocyanate and results in a highly colored product.

U.S. Patent No. 5,218,133 describes the cracking of silylorganocarbamate in the presence of cracking catalyst under moderate heating and subatmospheric pressure to a non-isolated silylorganoisocyanate intermediate and by-product alcohol, the silylorganoisocyanate then undergoing trimerization in the presence of trimerization catalyst *in situ* to provide silylisocyanurate. Typical cracking catalysts for this process include aluminum, titanium, magnesium and zirconium alkoxides such as aluminum triethoxide which is indicated to be preferred and tin carboxylates such as dibutyltin dilaurate, dibutyltin diacetate and stannous octoate which are indicated to be preferred. Trimerization catalysts employed in the process of U.S. Patent No. 5,218,133 include sodium methoxide and the alkali metal salts of organic acids such as the sodium, potassium, lithium and cesium salts of glacial acetic acid, propionic acid, butyric acid, hexanoic acid, and the like. Both the cracking catalyst and the trimerization catalyst are present throughout the conversion of the silylorganocarbamate to silylisocyanurate in the process of U.S. Patent No. 5,218,133. Due to toxicity and/or environmental considerations, the foregoing aluminum-containing and tin-containing cracking catalysts, if solid, must be separated from the liquid product stream or, if liquid, will remain dissolved in the product stream where they can cause instabilities such as an increase in color and/or adversely affect the end use(s) of the product silylisocyanurate.

The utilization of aluminum-containing and tin-containing cracking catalysts for the production of silylisocyanurate therefore involves certain disadvantages, either for the cracking/trimerization process itself or, potentially, for the silylisocyanurate product resulting from the process.

### SUMMARY OF THE INVENTION

The above object is solved according to the invention by the process of claim 1. Preferred embodiments are subject matter of the dependent claims.

In accordance with the present invention, a process for making silylisocyanurate is provided which comprises cracking silylorganocarbamate in the presence of a catalytically effective amount of, as cracking catalyst, at least one caboxylate salt selected from the group consisting of ammonium carboxylate, alkali metal carboxylate and alkaline earth metal carboxylate to provide silylorganoisocyanate and trimerizing silylorganoisocyanate in the presence of the caboxylate salt to provide silylisocyanurate.

The foregoing process dispenses entirely with the metal-containing alkoxide and tin-containing cracking catalysts of U.S. Patent No. 5,218,133 which may actually hinder the, progress of the subsequent trimerization reaction which provides the desired silylisocyanurate product. The metal-containing alkoxides and tin-containing compounds of U.S. Patent No. 5,218,133 will therefore ordinarily be substantially absent from the reaction medium of the process of this invention. By omitting either of these known types of cracking catalyst, the process of this invention provides a clean, rapid and relatively simple trimerization procedure. Although filtration of the carboxylate salt catalyst herein is required, this substance is non-toxic and presents no particular environmental hazard or waste disposal problem.

### DETAILED DESCRIPTION OF THE INVENTION

The process of this invention results in the production of silylisocyanurate. In one embodiment of the process, isocyanurate preparation can be represented by the general reaction scheme 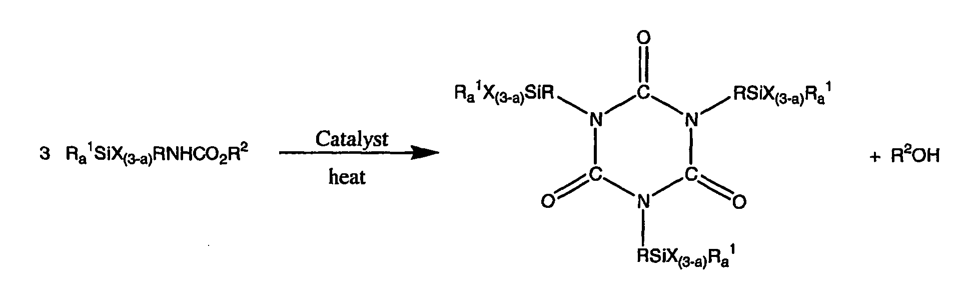 wherein each R independently is a divalent hydrocarbon group having 2 to 11 carbon atoms and preferably 3 to 5 carbon atoms; each R¹ independently is an alkyl or halogenated alkyl group having 1 to 8 carbon atoms, an aryl group having at least 6 ring carbon atoms, or an aralkyl group; each X independently is a hydrolyzable alkoxy group, trialkylsiloxy group or alkoxy-substituted alkoxy group; and, a is an integer from 0 to 3 inclusive; and, each R² is an alkyl group having 1 to 8 carbon atoms.

The silylorganocarbamate from which the foregoing silylisocyanurate is obtained can be prepared in accordance with any known or conventional process, e.g., the process of U.S. patent No. 5,218,133, the entire contents of which are incorporated by reference herein. In brief, the silylorganocarbamate can be prepared by reacting an aminosilane, e.g., an aminoalkyltriethoxysilane such as aminopropyltrimethoxysilane, aminopropyltriethoxysilane, etc., with a dialkylcarbonate, diarylcarbonate or mixture thereof such as dimethylcarbonate, diethylcarbonate, dipropylcarbonate, dibutyl carbonate, diphenylcarbonate, etc., in the presence of a basic catalyst, e.g., an alkali metal alkoxide such as sodium methoxide (sodium methylate) which, following the reaction to produce the silylorganocarbamate, is neutralized with a carboxylic acid such as formic acid, glacial acetic acid, propanoic acid, butanoic acid, etc. to form the corresponding alkali metal carboxylate, i.e., a carboxylate salt which is useful as a catalyst for the cracking reaction of the process of this invention.

It is advantageous to employ a silylorganocarbamate in the process of this invention which is made with an alkali metal alkoxide subsequently neutralized with carboxylic acid since the catalyst for the process will then already be present in the silylorganocarbamate reactant. Accordingly, it is a particular aspect of this invention to prepare a silylorganocarbamate in this way for utilization in the cracking/trimerization process herein. Preparing the silylorganocarbamate reactant in the aforesaid manner obviates the need to remove alkali metal carboxylate salt therefrom which is indicated to be preferred in U.S. Patent No. 5,218,133.

Examples of silylorganocarbamate reactant which are useful in the practice of the process of this invention include methyl N-3-(trimethoxysilyl)-propylcarbamate, ethyl N-3-(trimethoxysilyl)propylcarbamate, methyl N-3-(triethoxysilyl)propylcarbamate, methyl N-3-(methyldimethoxysilyl)propylcarbamate, methyl N-3-(dimethylmethoxysilyl)propylcarbamate, methyl N-3-(triethoxysilyl) propylcarbamate, ethyl N-3-(triethoxysilyl)propylcarbamate, methyl N-3-(methoxydiethoxysilyl)propylcarbamate, methyl N-3-(trimethoxysilyl)butylcarbamate, methyl N-3-(triethoxysilyl)butylcarbamate, and the like.

The carboxylate salt cracking catalyst employed in the process of the invention is at least one ammonium carboxylate, alkali metal carboxylate or alkaline earth metal carboxylate.

The term "ammonium" shall be understood herein to include the ammonium cation, NH₄⁺, and the mono-, di-, tri- and tetrahydrocarbyl-substituted variants thereof.

The term "carboxylate" shall be understood herein to mean the salt of a monocarboxylic acid, dicarboxylic acid or dicarboxylic acid anhydride of up to about 20 carbon atoms and advantageously of up to about 12 carbon atoms.

Illustrative of the ammonium carboxylate salt cracking catalysts herein are ammonium formate, ammonium acetate, ammonium propanoate, ammonium n-butanoate, ammonium n-pentanoate, ammonium 2-methylpropanoate, ammonium 3-methylbutanoate (valerate), ammonium benzoate, tetramethylammonium acetate, tetraethylammonium acetate, tetrabutylammonium acetate, tetramethylammonium 2-ethylhexanoate, tetraethylammonium 2-ethylhexanoate, tetramethylammonium benzoate, tetraethylammonium benzoate, tetrapropylammonium benzoate, tetrabutylammonium benzoate, and the like.

Illustrative of the alkali metal carboxylates are lithium formate, lithium acetate, lithium propanoate, sodium formate, sodium acetate, sodium propanoate, sodium n-butanoate, sodium n-hexanoate, sodium oleate, sodium laurate, sodium palmitate, disodium malonate, disodium succinate, disodium adipate, and the like.

Illustrative of the alkaline earth metal carboxylate cracking catalysts herein are the calcium, magnesium and barium carboxylates derived from formic acid, acetic acid, propanoic acid, n-butanoic acid, and the like.

The alkali metal carboxylates are readily available or are easily manufactured, e.g., *in situ,* and generally provide good results. Alkali metal formates are especially advantageous for use herein in that they appear to be more readily removed by filtration from the reaction product mixture than, say, the corresponding acetates and carboxylates of higher carboxylic acids. The alkali metal carboxylate salt is advantageously already present in the silylorganocarbamate reactant due to the manufacturing procedure described above in which the alkali metal alkoxide catalyst used in making the silylorganocarbamate is neutralized post-reaction with carboxylic acid. Alternatively, the alkali metal carboxylate can be generated *in situ* by the addition of alkali metal alkoxide and carboxylic acid to the silylorganocarbamate and/or previously prepared alkali metal carboxylate can be added to the silylorganocarbamate.

Regardless of how the carboxylate salt catalyst is introduced into the reaction medium, it must be present in a catalytically effective amount for the cracking reaction and must continue to be present for the subsequent trimerization reaction to provide product silylisocyanurate. In general, from about 0.01 to about 0.5 weight percent, and advantageously from about 0.05 to about 0.2 weight percent, of carboxylate salt catalyst based upon the total amount of silylorganocarbamate in the reaction medium can be utilized with generally good results.

The process of the invention can be carried out by heating the silylorganocarbamate-containing reaction mixture in the presence of the carboxylate salt cracking catalyst under subatmospheric pressure for a sufficient period of time for substantially complete overall conversion of the silylorganocarbamate to silylisocyanurate to take place. Those skilled in the art can readily optimize these process conditions for a particular silylorganocarbamate reactant and carboxylate salt cracking catalyst employing straightforward experimental procedures. Reaction times ranging from about 10 minutes to about 24 hours, advantageously from about 15 minutes to about 1 hour, temperatures ranging from about 160°C to about 250°C, advantageously from about 190°C to about 210°C, and pressures ranging from about 5 to about 400 millimeters Hg (about 0.65 kPa to about 26 kPa), advantageously from about 75 to about 300 millimeters Hg (from about 2 kPa to about 9.8 kPa), generally provide good results.

Among the silylisocyanurates that can be readily and conveniently prepared by the process of this invention are 1,3,5-tris[3-(trimethoxysilyl)propyl]-isocyanurate; 1,3,5-tris[3-(triethoxysilyl)propyl]isocyanurate; 1,3,5-tris[3-(methyldi-methoxysilyl)propyl]isocyanurate; and, 1,3,5-tris[3-(methyldiethoxysilyl)propyl]-isocyanurate.

In the examples that follow, silylorganocarbamate is prepared by the process of U.S. Patent No. 5,218,133 employing sodium methoxide catalyst and neutralizing the catalyst following completion of the reaction with organic acid, specifically, formic acid and acetic acid, the latter as disclosed in U.S. Patent No. 5,218,133. Neutralization is carried out to a pH of about 9-4, by-product alcohol is stripped by heating to 210°C while slowly decreasing pressure so that the column remains relatively cool. The evolved alkanol, in this case methanol, is removed to a receiver. When the pressure reaches a desired value without noticeable methanol removal, the reaction is determined to be substantially complete. This change in pressure profile is an important function of the process. If the pressure is immediately reduced to less than 100 mmHg, the temperature cannot quickly reach 200°C due to heavy reflux of both the silylcarbamate and silylisocyanate thus resulting in undesirably extended reaction times.

### Example 1

To a 2L 4 necked round bottom flask equipped with overhead stirrer, Vigreaux column, thermocouple and distillation head was added 900 g of previously prepared crude methyl *N*-3-(trimethoxysilyl)propylcarbamate containing sodium methoxide catalyst used in its production, unreacted dimethylcarbonate and methanol by-product. The reaction medium was neutralized with 1.97 grams of formic acid and briefly agitated resulting in the formation of sodium formate *in situ.* The solvent pH was measured at 5.9. The mixture was then heated to 130°C under atmospheric pressure to remove dimethylcarbonate and methanol. The stirred reaction mixture containing the sodium formate formed *in situ* was then rapidly heated to 210°C with initial pressure set at 365 mmHg. When the temperature reached 185°C, a sample was removed for measurement of pH, which was 5.6. For comparative purposes, the time when the temperature reached 185°C was set as T=0. At this time, there was no evidence of reaction as evidenced by vapor evolution. After T=3 minutes, there was evidence of methanol vapors and the temperature had slightly exceeded the setpoint and reached 214°C. Another sample for pH showed an increase to 8.3. At T=18 minutes, the vapors evolution was heavy and the pH had reached 10.0. The pressure was reduced to 87 mmHg in stages until no more takeoff of lights was observed. At this time the reaction was determined to be substantially complete. Total time was 30 minutes. The reaction mixture was cooled to room temperature and the mixture was easily pressure-filtered through a 12 micron pad.

The reaction was monitored via gas chromatography (GC) with comparison to known peaks. As samples were removed for pH measurement, they were also analyzed by GC. The conversion was measured by disappearance of the combined carbamate/isocyanate peak. At maximum conversion, the major peak by GC was determined to be 1,3,5-tris[3-(trimethoxysilyl) propyl]isocyanurate. Table 1 sets forth the conversion with respect to time.

**Table 1: Conversion with Respect to Time**

| Reaction Time (min) | Conversion (wt.%) |
|---|---|
| 0 | 0 |
| 3 | 12.2 |
| 18 | 73.9 |
| 30 | 94.4 |

### Example 2

To a 2L 4 necked round bottom flask equipped with overhead stirrer, Vigreux column, thermocouple, and distillation head was added 900 g of previously prepared crude methyl *N*-3-(trimethoxysilyl)propylcarbamate containing sodium methoxide catalyst used in its production. This mixture was neutralized with approximately 6 grams of acetic acid and briefly agitated resulting in the formation of sodium acetate *in situ.* The solvent pH was measured at 6.2. This mixture was then heated to 130°C under atmospheric pressure to remove the dimethylcarbonate and methanol. The stirred reaction mixture containing the sodium acetate formed *in situ* was then rapidly heated to 210°C with initial pressure set at 383 mmHg. At a temperature of 187°C, the pH of the sample was 6.1. No reaction was observed at this time. For comparison purposes, this was set at T=0. After 20 minutes, temperature had reached 206°C with very little evidence of reaction. The pH of the mixture was 6.4. After 55 min, gas evolution was observed. The conditions were 207°C and 250 mmHg and the reaction pH was 8.6. After a total of 1 hr and 15 min the reaction was terminated and the reaction medium cooled to room temperature. The mixture was pressure filtered through a 12 micron pad. The filtration was noticeably more difficult than that of Example 1.

The reaction was monitored via gas chromatography with comparison to known peaks. As samples were removed for pH measurement, they were also analyzed by GC. The conversion was measured by disappearance of the combined carbamate/isocyanate peak. At maximum conversion, the major peak by GC was determined to be 1,3,5-tris[3-(trimethoxysilyl) propyl] isocyanurate. Table 2 sets forth the conversion with respect to time.

**Table 2: Conversion with Respect to Time**

| Reaction Time (min) | Conversion (wt.%) |
|---|---|
| 0 | 0 |
| 20 | 9.0 |
| 55 | 73.1 |
| 75 | 83.2 |

Comparing these data with that of Table 1 of Example 1, it will be seen that there is a significant increase in conversion with respect to time with sodium formate as cracking catalyst compared to sodium acetate cracking catalyst.

### Example 3

To a 110 gallon reactor were added 500 lbs of crude methyl *N*-3-(trimethoxysilyl)propylcarbamate containing sodium methoxide catalyst used in its production and 550 grams of formic acid to produce sodium formate *in situ.* The mixture containing the sodium formate formed *in situ* was briefly agitated and the resulting solvent pH was found to be 5.7. After the mixture was stripped of lights at a temperature of 135°C and atmospheric pressure, the reactor temperature was brought to 210°C with the initial vacuum at 350 mmHg. The temperature was held at 210°C while the pressure was reduced at such a rate to keep the differential pressure of the column less than 10 mmHg. After heating for 1.75 hrs, the final pressure was 70 mmHg. With a negligible difference in pressure across the column, the reaction was considered to have been substantially complete. The reaction mixture was cooled to room temperature, and a portion of the mixture was readily pressure filtered through a 5 micron pad using Celite 535 as a filter aid. NMR analysis and gas chromatography verified the product as 1,3,5-tris[3-(trimethoxysilyl) propyl]isocyanurate meeting all specifications typical of commercial material.

### Example 4

Dimethylcarbonate (282 lbs) and 25% sodium methoxide (8 lbs) were charged to a 110 gallon reactor. 3-Aminopropyltrimethoxysilane was added to this mixture from an auxillary tank at 200-250 lbs/hr. The reaction was allowed to exotherm to 50°C where it was held for 2 hrs after addition was complete. The carbamate reaction was determined to have been substantially complete by titration. To the reaction mixture was added 2.5 kg formic acid to produce sodium formate *in situ*. The mixture containing the sodium formate formed *in situ* was briefly agitated and then the lights were stripped at 135°C and atmospheric pressure. After stripping, the reactor temperature was increased to 210°C with initial pressure of 359 mmHg. As reaction proceeded, the pressure was reduced such that the differential pressure of the column was less than 10 mmHg. After heating for 2 hrs and 10 minutes, the reaction was determined to have been substantially complete when the pressure reached 94 mmHg with negligible differential pressure across the column. The reaction mixture was cooled to room temperature with a portion of the mixture being readily pressure filtered through a 5 micron pad using Celite 535 as a filter aid. NMR analysis and gas chromatography confirmed that the product was 1,3,5-tris[3-(trimethoxysilyl) propyl]isocyanurate meeting all specifications typical of a commercial material.

### Example 5

To a 110 gallon reactor were added 500 lbs of crude methyl N-3-(trimethoxysilyl)propylcarbamate containing sodium methoxide catalyst used in its production and 1,066 grams of acetic acid to produce sodium acetate *in situ.* The mixture was briefly agitated and the resulting solvent pH was found to be 6.5. After the mixture was stripped of lights at a temperature of 135°C and atmospheric pressure, the reactor temperature was brought to 210°C with the initial vacuum at 248 mmHg. The temperature was held at 210°C while the pressure was reduced at such a rate to keep the differential pressure of the column less than 10 mmHg. After heating for 3.5 hrs, the final pressure was 66 mmHg. With negligible differential pressure across the column, the reaction was determined to have been substantially complete. The reaction mixture was cooled to room temperature with a portion of the mixture being pressure filtered through a 12 micron pad using Celite 535 as a filter aid only with considerable difficulty. NMR analysis and gas chromatography confirmed that the product was 1,3,5-tris[3-(trimethoxysilyl) propyl]isocyanurate meeting all specifications typical of a commercial material.

### Example 6

To a 2L 4 necked round bottom flask equipped with overhead stirrer, Vigreux column, thermocouple, and distillation head was added 750 grams of methyl N-3-(trimethoxysilyl)propylcarbamate that was previously distilled to remove any alkali metal carboxylate. This mixture was treated with 7.0 grams of 25% sodium methoxide solution and 1.5 grams of formic acid to produce sodium formate *in situ.* The stirred reaction mixture was then rapidly heated to 200°C with initial pressure set at 300 mmHg. The temperature was held around 200°C for 2 hrs. The pressure was gradually reduced to 70 mmHg during this time. The mixture was then cooled and filtered.

The conversion, which was measured by disappearance of the combined carbamate/isocyanate peak, was found to be 94%. The 1,3,5-tris[3-(trimethoxysilyl) propyl]isocyanurate was approximately 73% of the final mixture.

### Example 7

To a 2L 4 necked round bottom flask equipped with overhead stirrer, Vigreux column, thermocouple, and distillation head was added 750 grams of methyl N-3-(trimethoxysilyl)propylcarbamate that was previously distilled to remove any alkali metal carboxylate. This mixture was treated with 7.0 grams of 25% sodium methoxide solution and 1.9 grams of acetic acid to produce sodium acetate *in situ.*

The stirred reaction mixture was then rapidly heated to 200°C with initial pressure set at 300 mmHg. The temperature was held around 200°C for 2 hrs. The pressure was gradually reduced to 70 mmHg during this time. The mixture was then cooled and filtered. The conversion, which was measured by disappearance of the combined carbamate/isocyanate peak, was found to be 89%. The 1,3,5-tris[3-(trimethoxysilyl) propyl]isocyanurate was approximately 81 wt. % of the final mixture.

### Example 8

To a 2L 4 necked round bottom flask equipped with overhead stirrer, vigreux column, thermocouple, and distillation head was added 750 grams of methyl *N*-3-(trimethoxysilyl)propylcarbamate that was previously distilled to remove any alkali metal carboxylate. To this material was added 2.49 grams of sodium acetate trihydrate. The stirred reaction mixture was then rapidly heated to 200°C with initial pressure set at 300 mmHg. The temperature was held between 200-210°C for 2hrs. The pressure was gradually reduced to 75 mmHg during this time. The mixture was then cooled and filtered. The conversion, which was measured by disappearance of the combined carbamate/isocyanate peak as measured by gas chromatography, was found to be 95% The 1,3,5-tris[3-(trimethoxysilyl) propyl]isocyanurate was approximately 72 wt. % of the final mixture.

### Example 9

To a 2L 4 necked round bottom flask equipped with overhead stirrer, vigreux column, thermocouple, and distillation head was added 750 grams of methyl N-3-(trimethoxysilyl)propylcarbamate that was previously distilled to remove any alkali metal carboxylate. To this material was added 1.55 grams of potassium acetate. The stirred reaction mixture was then rapidly heated to 200°C with initial pressure set at 300 mmHg. The temperature was held around 200°C for approximately 1 hr. The pressure was gradually reduced to 75 mmHg during this time. The mixture was then cooled and filtered. The conversion, which was measured by disappearance of the combined carbamate/isocyanate peak as measured by gas chromatography, was found to be 96%. The 1,3,5-tris[3-(trimethoxysilyl) propyl]isocyanurate was approximately 54 wt. % of the final mixture.

### Comparative Example 1

To a 2L 4 necked round bottom flask equipped with overhead stirrer, vigreux column, thermocouple, and distillation head was added 750 grams of methyl N-3-(trimethoxysilyl)propylcarbamate that was previously distilled to remove any alkali metal carboxylate. No carboxylic acid or alkali metal carboxylate was added to this material. The stirred reaction mixture was then rapidly heated to 200°C with initial pressure set at 300 mmHg. The temperature was held between 200-210°C for 6hrs. The pressure was gradually reduced to 105 mmHg during this time. The mixture was then cooled and filtered. The conversion, which was measured by disappearance of the combined carbamate/isocyanate peak as measured by gas chromatography, was found to be 30%. 1,3,5-tris[3-(trimethoxysilyl) propyl]isocyanurate constituted only about 1 wt. % of the final mixture.

### Comparative Example 2

To a 2L 4 necked round bottom flask equipped with overhead stirrer, vigreux column, thermocouple, and distillation head was added 750 grams of methyl *N*-3-(trimethoxysilyl)propylcarbamate that was previously distilled to remove any alkali metal carboxylate. This mixture was treated with 1.96 grams of acetic acid and briefly agitated. The stirred reaction mixture was then rapidly heated to 200°C with initial pressure set at 300 mmHg. The temperature was held between 200-210°C for 6hrs. The pressure was gradually reduced to 98 mmHg during this time. The mixture was then cooled and filtered. The conversion, which was measured by disappearance of the combined carbamate/isocyanate constituted only about peak, was found to be 24%. 1,3,5-tris[3-(trimethoxysilyl) propyl]isocyanurate constituted only about 1 wt. % of the final mixture.

### Comparative Example 3

To a 2L 4 necked round bottom flask equipped with overhead stirrer, vigreux column, thermocouple, and distillation head was added 750 grams of methyl *N*-3-(trimethoxysilyl)propylcarbamate that was previously distilled to remove any alkali metal carboxylate. To this material was added 1.13 grams of aluminum ethoxide. The stirred reaction mixture was then rapidly heated to 200°C with initial pressure set at 300 mmHg. The temperature was held between 200-210°C for 6hrs. The pressure was gradually reduced to 120 mmHg during this time. The mixture was then cooled and filtered. The conversion, which was measured by disappearance of the combined carbamate/isocyanate peak as measured by gas chromatography, was found to be 39% 1,3,5-tris[3-(trimethoxysilyl) propyl]isocyanurate constituted only 0.8% of the final blend.

| Example | Additive(s) | Reaction Time (hrs) | % Conversion | Wt.% Silyl-isoyanurate |
|---|---|---|---|---|
| 6 | NaOMe/ Formic acid (forming HCOONa *in situ*) | 2 | 94 | 73 |
| 7 | NaOMe/ Acetic acid (forming CH₃COONa *in situ*) | 2 | 89 | 81 |
| 8 | NaOAc | 2 | 95 | 72 |
| 9 | KOAc | 1 | 96 | 54 |
| Comp 1 | none | 6 | 30 | 1.0 |
| Comp 2 | Acetic acid | 6 | 24 | 1.0 |
| Comp 3 | Al(OEt)₃ | 6 | 39 | 0.8 |

## Claims

1. A process for making silylisocyanurate which comprises cracking silylorganocarbamate in the presence of a catalytically effective amount of, as cracking catalyst, at least one carboxylate salt selected from the group consisting of ammonium carboxylate, alkali metal carboxylate and alkaline earth metal carboxylate to provide silylorganoisocyanate and trirnerizing silylorganoisocyanabe in the presence of the carboxylate salt to provide silylisocyanurate, whereas
the process is carried out in the substantial absence of metal alkoxide or tin-containing compound.

2. The process of Claim 1 wherein the silylorganocarbamate is of the general formula
Ra¹SiX₍₃₋ₐ)RNHCO₂R²
and wherein the silylisocyanurate is of the general formula 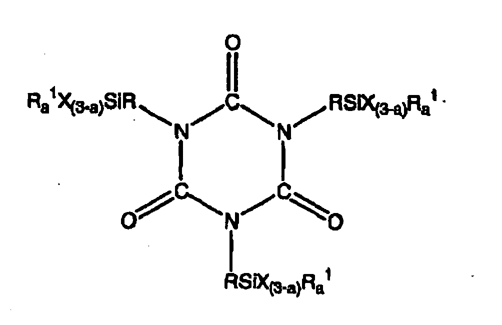 wherein each R independently is a divalent hydrocarbon group having 2 to 11 carbon atoms and preferably 3 to 5 carbon atoms; each R¹ independently is an alkyl or halogenated alkyl group having 1 to 8 carbon atoms, an aryl group having at least 6 ring carbon atoms, or an aralkyl group; each X independently is a hydrolyzable alkoxy group, trialkylsiloxy group or alkoxy-substituted alkoxy group; and, a is an integer from 0 to 3 inclusive; and, each R² is an alkyl group having 1 to 8 carbon atoms.

3. The process of Claim 2 wherein the silylorganocarbamate is at least one of methyl N-3-(trimethoxysilyl)-propylcarbamate, ethyl N-3-{trimethoxysilyl) propylcarbarnate, methyl N-3-(triethoxysilyl)propylcarbamate, methyl N-3-(methyldimethoxysilyl)-propylcarbamate, methyl N-3-(dimethylmeffioxysityl)-propylcarbamate, methyl N-3-(triethoxysilyl) propylcarbamate, ethyl N-3-(triethoxysilyl)-propylcarbamate, methyl N-3-(methoxydiethoxysilyl)propylcarbamate, methyl N-3-(trimethoxysilyl) butylcarbamate, methyl N-3-(triethoxysilyl)butylcarbamate, and the like.

4. The process of Claim 1 wherein the carboxylate salt is an alkali metal carboxylate salt of a carboxylic acid of from 1 to about 20 carbon atoms, the salt optionally being in anhydrous form.

5. The process of Claim 1 wherein the carboxylate salt is an alkali metal carboxylate salt of a carboxylic acid of from 1 to about 12 carbon atoms, the salt optionally being in anhydrous form.

6. The process of Claim 1 wherein the alkali metal carboxylate salt is selected from the group consisting of lithium formate, sodium formate, potassium formate, lithium acetate, sodium acetate, potassium acetate, lithium propanoate, sodium propanoate, potassium propanoate, and mixtures thereof, optionally, in anhydrous form.

7. The process of Claim 1 wherein the silylorganocarbamate contains preformed alkali metal carboxylate salt.

8. The process of Claim 1 wherein the silylorganocarbamate contains preformed alkali metal formate.

9. The process of Claim 1 wherein the silylorganocarbamate contains alkali metal carboxylate salt produced *in situ* by the reaction of alkali metal alkoxide with carboxylic acid.

10. The process of Claim 9 wherein the alkali metal alkoxides is at least one of sodium methoxide, sodium ethoxide, sodium propoxide, sodium tert-butoxide, potassium methoxide, potassium ethoxide, potassium propoxide or potassium tert-butoxide and the carboxylic acid is at least one of formic acid, acetic acid and propanoic acid.

11. The process of Claim 1 wherein the carboxylate salt is present at about 0.01 to about 0.5 weight percent based upon the total amount of silylorganocarbamate.

12. The process of Claim 1 wherein the carboxylate salt is present at about 0.05 to about 0.2 weight percent based upon the total amount of silylorganocarbamate.

13. The process of Claim 1 wherein the reaction conditions include a residence time of from about 10 minutes to about 24 hours, a temperature of from about 160°C to about 250°C and a pressure of from about 5 to about 400 millimeters Hg.

14. The process of Claim 1 wherein the reaction conditions include a residence time of from about 15 minutes to about 1 hour, a temperature of from about 190°C to about 210°C and a pressure of from about 15 to about 75 millimeters Hg.

15. The process of Claim 1 wherein the silylorganocarbamate contains alkali metal carboxylate salt and is obtained by the process which comprises reacting an organosilane with a dialkylcarbonate in the presence of alkali metal alkoxide catalyst to provide silylorganocarbamate and neutralizing the alkali metal alkoxide with carboxylic acid to produce alkali metal carboxylate salt which remains in the silylorganocarbamate.

16. The process of Claim 15 wherein the alkali metal alkoxide is at least one of sodium methoxide, sodium ethoxide, sodium propoxyde, sodium tert-butoxide, potassium methoxide, potassium ethoxide, potassium propoxide or potassium tert-butoxide and the carboxylic acid is at least one of formic acid, acetic acid and propanoic acid

17. The process of Claim 15 wherein the silylorganocarbamate contains from about 0.01 to about 0.5 weight percent alkali metal carboxylate.

18. The process of Claim 15 wherein the silylorganocarbamate contains from about 0.05 to about 0.2 weight percent alkali metal carboxylate.

19. The process of Claim 15 wherein the alkali metal carboxylate salt is sodium formate.

## Patentansprüche

1. Verfahren zum Herstellen von Silylisocyanurat, welches umfasst: Cracken von Silylorganocarbamat bei Vorhandensein einer katalytisch wirksamen Menge von mindestens einem Carboxylatsalz gewählt aus der Gruppe bestehend aus Ammoniumcarboxylat, Alkalimetallcarboxylat und Erdalkalimetall-Carboxylat als Crack-Katalysator, um Silylorganoisocyanat vorzusehen, und Trimerisieren von Silylorganoisocyanat bei Vorhandensein des Carboxylatsalzes, um Silylisocyanurat vorzusehen, wobei
das Verfahren im Wesentlichen bei Fehlen von Metallalkoxid oder einer Zinn enthaltenden Verbindung durchgeführt wird.

2. Verfahren nach Anspruch 1, **dadurch gekennzeichnet, dass** das Silylorganocarbamat die allgemeine Formel
Rₐ¹SiX₍₃₋ₐ₎RNHCO₂R²
aufweist und wobei das Silylisocyanurat die allgemeine Formel 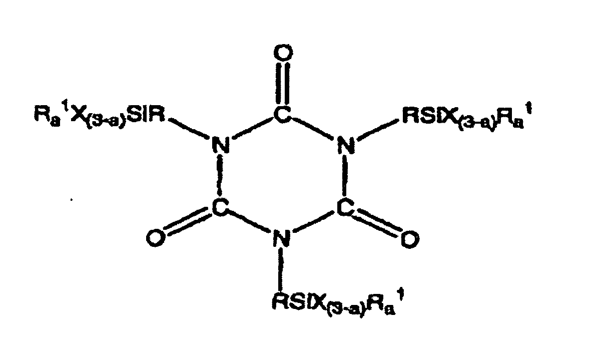 aufweist, wobei jedes R unabhängig eine divalente Kohlenwasserstoffgruppe mit 2 bis 11 Kohlenstoffatomen und vorzugsweise 3 bis 5 Kohlenstoffatomen ist; jedes R¹ unabhängig eine Alkyl- oder halogenierte Alkylgruppe mit 1 bis 8 Kohlenstoffatomen, eine Arylgruppe mit mindestens 6 Ringkohlenstoffatomen oder eine Aralkylgruppe ist; jedes X unabhängig eine hydrolysierbare Alkoxygruppe, eine Trialkylsiloxygruppe oder eine alkoxy-substituierte Alkoxygruppe ist; und a eine ganze Zahl von 0 bis einschließlich 3 ist; und jedes R² eine Alkylgruppe mit 1 bis 8 Kohlenstoffatomen ist.

3. Verfahren nach Anspruch 2, **dadurch gekennzeichnet, dass** das Silylorganocarbamat mindestens eines von Methyl-N-3-(trimethoxysilyl)propylcarbamat, Ethyl-N-3-(trimethoxysilyl)propylcarbamat, Methyl-N-3-(triethoxysilyl)propylcarbamat, Methyl-N-3-(methyldimethoxysilyl)-propylcarbamat, Methyl-N-3(dimethylmethoxysilyl)propylcarbamat, Methyl-N-3-(triethoxysilyl)propylcarbamat, Ethyl-N-3-(triethoxysilyl)propylcarbamat, Methyl-N-3-(methoxydiethoxysilyl)propylcarbamat, Methyl-N-3-(trimethoxysilyl)butylcarbamat, Methyl-N-3-(triethoxysilyl)butylcarbamat und dergleichen ist.

4. Verfahren nach Anspruch 1, **dadurch gekennzeichnet, dass** das Carboxylatsalz ein Alkalimetall-Carboxylatsalz einer Carbonsäure mit 1 bis etwa 20 Kohlenstoffatomen ist, wobei das Salz optional in wasserfreier Form vorliegt.

5. Verfahren nach Anspruch 1, **dadurch gekennzeichnet, dass** das Carboxylatsalz ein Alkalimetall-Carboxylatsalz einer Carbonsäure mit 1 bis etwa 12 Kohlenstoffatomen ist, wobei das Salz optional in wasserfreier Form vorliegt.

6. Verfahren nach Anspruch 1, **dadurch gekennzeichnet, dass** das Alkalimetall-Carboxylatsalz aus der Gruppe bestehend aus Lithiumformiat, Natriumformiat, Kaliumformiat, Lithiumacetat, Natriumacetat, Kaliumacetat, Lithiumpropanoat, Natriumpropanoat, Kaliumpropanoat und Gemischen derselben, optional in wasserfreier Form, ausgewählt ist.

7. Verfahren nach Anspruch 1, **dadurch gekennzeichnet, dass** das Silylorganocarbamat ein vorgeformtes Alkalimetall-Carboxylatsalz enthält.

8. Verfahren nach Anspruch 1, **dadurch gekennzeichnet, dass** das Silylorganocarbamat ein vorgeformtes Alkalimetallformiat enthält.

9. Verfahren nach Anspruch 1, **dadurch gekennzeichnet, dass** das Silylorganocarbamat ein Alkalimetall-Carboxylatsalz enthält, das *in situ* durch die Reaktion von Alkalimetallalkoxid mit Carbonsäure erzeugt wird.

10. Verfahren nach Anspruch 9, **dadurch gekennzeichnet, dass** das Alkalimetalloxid mindestens eines von: Natriummethoxid, Natriumethoxid, Natriumpropoxid, Natrium-tert-butoxid, Kaliummethoxid, Kaliumethoxid, Kaliumpropoxid oder Kalium-tert-butoxid ist und die Carbonsäure mindestens eines von: Ameisensäure, Essigsäure und Propionsäure ist.

11. Verfahren nach Anspruch 1, **dadurch gekennzeichnet, dass** das Carboxylatsalz bei etwa 0,01 bis etwa 0,5 Gewichtsprozent basierend auf der Gesamtmenge von Silylorganocarbamat vorliegt.

12. Verfahren nach Anspruch 1, **dadurch gekennzeichnet, dass** das Carboxylatsalz bei etwa 0,05 bis etwa 0,2 Gewichtsprozent basierend auf der Gesamtmenge von Silylorganocarbamat vorliegt.

13. Verfahren nach Anspruch 1, **dadurch gekennzeichnet, dass** die Reaktionsbedingungen eine Verweilzeit von etwa 10 Minuten bis etwa 24 Stunden, eine Temperatur von etwa 160°C bis etwa 250°C und einen Druck von etwa 5 bis etwa 400 mm/Hg umfassen.

14. Verfahren nach Anspruch 1, **dadurch gekennzeichnet, dass** die Reaktionsbedingungen eine Verweilzeit von etwa 15 Minuten bis etwa 1 Stunde, eine Temperatur von etwa 190°C bis etwa 210°C und einen Druck von etwa 15 bis etwa 75 mm/Hg umfassen.

15. Verfahren nach Anspruch 1, **dadurch gekennzeichnet, dass** das Silylorganocarbamat Alkalimetall-Carboxylatsalz enthält und durch das Verfahren erhalten wird, dass umfasst: das zur Reaktion bringen eines Organosilans mit einem Dialkylcarbonat bei Vorhandensein eines Alkalimetall-Alkoxidkatalysators, um ein Silylorganocarbamat vorzusehen, und das Neutralisieren des Alkalimetallalkoxids mit Carbonsäure, um ein Alkalimetall-Carboxylatsalz zu erzeugen, das in dem Silylorganocarbamat verbleibt.

16. Verfahren nach Anspruch 15, **dadurch gekennzeichnet, dass** das Alkalimetallalkoxid mindestens eines von: Natriummethoxid, Natriumethoxid, Natriumpropoxid, Natrium-tert-butoxid, Kaliummethoxid, Kaliumethoxid, Kaliumpropoxid oder Kalium-tert-butoxid ist und die Carbonsäure mindestens eines von: Ameisensäure, Essigsäure und Propionsäure ist.

17. Verfahren nach Anspruch 15, **dadurch gekennzeichnet, dass** das Silylorganocarbamat etwa 0,01 bis etwa 0,5 Gewichtsprozent Alkalimetallcarboxylat enthält.

18. Verfahren nach Anspruch 15, **dadurch gekennzeichnet, dass** das Silylorganocarbamat etwa 0,05 bis etwa 0,2 Gewichtsprozent Alkalimetallcarboxylat enthält.

19. Verfahren nach Anspruch 15, **dadurch gekennzeichnet, dass** das Alkalimetall-Carboxylatsalz Natriumformiat ist.

## Revendications

1. Un procédé de production de silylisocyranurate comprenant le craquage du carbamate organique silylé en présence d'une quantité efficace catalytiquement d'au moins un sel de carboxylate sélectionné comme catalyseur de craquage à partir du groupe se composant de carboxylate d'ammonium, de carboxylate de métal alcalin et de carboxylate de métal alcalino-terreux pour obtenir de l'isocyanate organique de silyle et la trimérisation de l'isocyanate organique de silyle en présence du sel de carboxylate pour obtenir du silylisocyranurate, sachant que
le procédé est réalisé en l'absence matérielle d'alcoxyde métallique ou de composite contenant de l'étain.

2. Le procédé de la revendication 1 dans lequel le carbamate organique silylé est de la formule générale :
Ra¹SIX_{(S-a)}RNHCO₂R²
et dans lequel le silylisocyanurate est de la formule générale 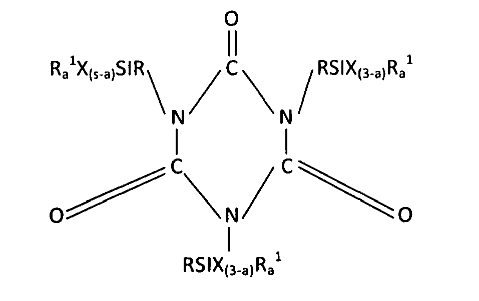 dans lequel chaque R est en soi un groupe d'hydrocarbures divalents ayant de 2 à 11 atomes de carbone et de préférence, de 3 à 5 atomes de carbone ; chaque R¹ est en soi un alcoyle ou un groupe d'alcoyles halogénés ayant 1 à 8 atomes de carbone, un groupe d'aryles ayant au moins 6 atomes de carbone cycliques ou un groupe d'aralcoyles ; chaque X est en soi un groupe alkoxy hydrolysable, un groupe trialkylsiloxy ou un groupe alkoxy substitué par alkoxy ; a est un nombre entier de 0 à 3 inclus ; et chaque R² est un groupe d'alcoyles ayant 1 à 8 atomes de carbone.

3. Le procédé de la revendication 2 dans lequel le carbamate organique silylé est au moins un produit parmi le méthyle N-3-(triméthoxysilylo)-propylcarbamate, l'éthyle N-3-(triméthoxysilylo)-propylcarbamate, le méthyle N-3-(triéthoxysilylo)-propylcarbamate, le méthyle N-3-(méthylodiméthoxysilylo)-propylcarbamate, le méthyle N-3-(diméthylométhoxysilylo)-propylcarbamate, le méthyle N3-(triéthoxysilylo)-propylcarbamate, l'éthyle N-3-(triéthoxysilylo)-propylcarbamate, le méthyle N-3-(méthoxydiéthoxysilylo)-propylcarbamate, le méthyle N-3-(triméthoxysilylo)-butylcarbamate, le méthyle N-3-(triéthoxysilylo)-butylcarbamate, et des produits similaires.

4. Le procédé de la revendication 1 dans lequel le sel de carboxylate est un sel de carboxylate de métal alcalin d'un acide carboxylique de 1 à environ 20 atomes de carbone, le sel étant en option en forme anhydre.

5. Le procédé de la revendication 1 dans lequel le sel de carboxylate est un sel de carboxylate de métal alcalin d'un acide carboxylique de 1 à environ 12 atomes de carbone, le sel étant en option en forme anhydre.

6. Le procédé de la revendication 1 dans lequel le sel de carboxylate de métal alcalin est sélectionné à partir du groupe constitué de formate de lithium, de formate de sodium, de formate de potassium, d'acétate de lithium, d'acétate de sodium, d'acétate de potassium, de propanoate de lithium, de propanoate de sodium, de propanoate de potassium, et en option, des mélanges de ces produits en forme anhydre.

7. Le procédé de la revendication 1 dans lequel le carbamate organique silylé contient du sel de carboxylate de métal alcalin préformé.

8. Le procédé de la revendication 1 dans lequel le carbamate organique silylé contient un formate de métal alcalin préformé.

9. Le procédé de la revendication 1 dans lequel le carbamate organique silylé contient du sel de carboxylate de métal alcalin produit *in situ* par la réaction de l'alcoxyde de métal alcalin avec de l'acide carboxylique.

10. Le procédé de la revendication 9 dans lequel l'alcoxyde de métal alcalin est au moins un produit parmi le méthoxyde de sodium, l'éthoxyde de sodium, le propoxyde de sodium, le tert-butoxyde de sodium, le méthoxyde de potassium, l'éthoxyde de potassium, le propoxyde de potassium ou le tert-butoxyde de potassium et l'acide carboxylique est au moins un produit parmi l'acide formique, l'acide acétique et l'acide propanoïque.

11. Le procédé de la revendication 1 dans lequel le sel de carboxylate est présent d'environ 0,01 à environ 0,5 pour cent de poids en se basant sur la quantité totale de carbamate organique silylé.

12. Le procédé de la revendication 1 dans lequel le sel de carboxylate est présent d'environ 0,05 à environ 0,2 pour cent de poids en se basant sur la quantité totale de carbamate organique silylé.

13. Le procédé de la revendication 1 dans lequel les conditions de réaction comprennent un temps de séjour allant d'environ 10 minutes à environ 24 heures, une température allant d'environ 160°C à environ 250°C et une pression allant d'environ 5 à environ 400 millimètres Hg.

14. Le procédé de la revendication 1 dans lequel les conditions de réaction comprennent un temps de séjour allant d'environ 15 minutes à environ 1 heure, une température allant d'environ 190°C à environ 210°C et une pression allant d'environ 15 à environ 75 millimètres Hg.

15. Le procédé de la revendication 1 dans lequel le carbamate organique silylé contient du sel de carboxylate de métal alcalin et est obtenu par le procédé qui comprend la réaction d'un organosilane avec un dialkylcarbonate en présence d'un catalysateur d'alcoxyde de métal alcalin pour obtenir du carbamate organique silylé et la neutralisation de l'alcoxyde de métal alcalin avec de l'acide carboxylique pour produire du sel de carboxylate de métal alcalin qui restera dans le carbamate organique silylé.

16. Le procédé de la revendication 15 dans lequel l'alcoxyde de métal alcalin est au moins un produit parmi le méthoxyde de sodium, l'éthoxyde de sodium, le propoxyde de sodium, le tert-butoxyde de sodium, le méthoxyde de potassium, l'éthoxyde de potassium, le propoxyde de potassium ou le tert-butoxyde de potassium et l'acide carboxylique est au moins un produit parmi l'acide formique, l'acide acétique et l'acide propanoïque.

17. Le procédé de la revendication 15 dans lequel le carbamate organique silylé contient d'environ 0,01 à environ 0,5 pour cent de poids de carboxylate de métal alcalin.

18. Le procédé de la revendication 15 dans lequel le carbamate organique silylé contient d'environ 0,05 à environ 0,2 pour cent de poids de carboxylate de métal alcalin.

19. Le procédé de la revendication 15 dans lequel le sel de carboxylate de métal alcalin est du formate de sodium.
